# FASCICULE DE BREVET EUROPEEN

(11) **EP 2 394 833 B1**
(45) Date de publication et mention de la délivrance du brevet: **16.01.2013**
(21) Numéro de dépôt: 11290262.2
(22) Date de dépôt: 08.06.2011
(51) Int. Cl.: B60J 1/00, F41H 5/26, F41H 7/04

(54) **Outillage permettant le pivotement d'un pare-brise et procédé mettant en oeuvre un tel outillage**
Werkzeug zum Drehen einer Windschutzscheibe und Verfahren zum Einsatz eines solchen Werkzeuges
Tool for pivoting a windshield and method using such a tool

(30) Priorité: 11.06.2010 FR 1002490
(43) Date de publication de la demande: 14.12.2011
(73) Titulaire: NEXTER Systems, 42328 Roanne (FR)
(72) Inventeur: Germenot, Oliver, 18023 Bourges (FR); Timmer, Bernard, 18023 Bourges (FR)
(74) Mandataire: Célanie, Christian

(56) Documents cités:
- EP-A1- 1 849 634
- DE-U1- 20 015 339
- DK-U3- 9 700 343
- US-B2- 7 610 666

## Description

Le domaine technique de l'invention est celui des outillages et des procédés de mise en place et de retrait des pare-brise lourds sur des véhicules sur le lieu d'utilisation des véhicules et sur le lieu d'intégration des véhicules.

La mise en place et le retrait d'un pare-brise est une opération délicate. L'opération est d'autant plus difficile qu'elle se déroule "hors atelier" où les moyens de levages classiques type pont roulant et palans sont absents. Les pare-brise étant relativement fragiles et encombrants l'opération peut nécessiter l'emploi de plusieurs personnes et se révéler malaisée du fait du peu de prise qu'offre une surface vitrée.

Il est connu suivant le brevet US-7610666 d'effectuer, sur le terrain, une opération de pose ou de dépose d'un pare-brise par une seule personne au moyen d'un outillage comportant des ventouses appliquées sur le pare-brise. Ces ventouses étant solidaires d'un bras articulé autour d'un support. Ce support étant lui-même solidaire d'une autre surface vitrée du véhicule au moyen d'autres ventouses. Une fois les ventouses appliquées, le pare-brise est désolidarisé du véhicule et l'on opère une rotation du bras pour amener le pare-brise dans une zone de dépose.

Compte tenu du mode de solidarisation de ce dispositif, celui ci présente comme inconvénient de ne pas pouvoir convenir pour la pose ou la dépose d'un pare-brise lourd tel que peut l'être un pare-brise blindé de forte épaisseur équipant un véhicule militaire ou de transport de fond par exemple. De tels pare-brise ont une masse de l'ordre de 150 kg.

Par ailleurs il est nécessaire pour certains véhicules notamment militaires d'abaisser ponctuellement un pare-brise lors de certaines opérations. C'est le cas en particulier pour les artilleries montées sur camion porteur et pour lesquelles lors des phases de transport aérien il est nécessaire d'abaisser le tube du canon dans une position sensiblement horizontale ce qui entraîne un passage du canon au travers de la cabine qui ne peut se faire que si le pare-brise est basculé.

Il est déjà connu pour des véhicules disposant de pare-brise non blindés de doter le bord inférieur de ces pare-brise d'une charnière permettant le basculement du pare-brise. Or les pare-brise lourds ne sont pas aisément basculables par une personne seule. De plus, l'épaisseur de ces pare-brise ne permet pas le positionnement d'une charnière sur son bord inférieur permettant le basculement du pare-brise d'un angle suffisant pour permettre le passage du tube du canon car la surépaisseur du pare-brise vient interférer avec le capot.

L'invention se propose de résoudre ces différents problèmes au travers d'un outillage venant s'interfacer d'une part sur le pare-brise par des moyens rigides et d'autre part sur des éléments saillant du véhicule comme les rétroviseurs. Un procédé associé à l'usage de cet outillage permet de faire basculer le pare-brise ou de le relever de manière contrôlée et sûre par une personne seule grâce à un actionneur et un moyen de butée.

L'invention permet ainsi avantageusement de pouvoir manoeuvrer aisément un pare-brise lourd pour le laisser en position pivotée par rapport à la cabine du véhicule. L'outillage permet également de faciliter le démontage du pare-brise en l'absence de moyens de levage.

Un tel démontage interviendra par exemple pour monter au choix soit un pare-brise léger ou un pare-brise lourd suivant le niveau de protection recherché ou tout simplement pour changer un pare-brise dégradé.

La compacité de l'outillage permet de l'emporter parmi les outillages de bord du véhicule et de pouvoir procéder aux opérations de pivotement, pose ou dépose du pare-brise en tout lieu. De plus, l'outillage permet aussi la tenue du pare-brise aux sollicitations de transport en mode pare-brise abaissé comme par exemple pour un transport aérien.

Ainsi, l'invention à pour objet un outillage permettant un pivotement limité par rapport à un véhicule d'un pare-brise lourd par une seule personne, outillage caractérisé en ce qu'il comporte deux montants rigidement solidarisables avec les bords latéraux du pare-brise, chacun des montants étant articulé par son extrémité basse avec une platine amovible qui est rendue solidaire du véhicule, les articulations des platines matérialisant un axe de pivotement du pare-brise par rapport au véhicule, au moins un premier montant étant relié par un actionneur à un moyen d'interfaçage amovible qui est fixé au véhicule à proximité du rebord haut du pare-brise, l'actionneur permettant de commander le pivotement du pare-brise autour de l'axe de pivotement et assurant le maintien du pare-brise dans une position pivotée choisie.

Avantageusement, un second montant est relié à un support amovible solidaire du véhicule à proximité du rebord haut du pare-brise par une biellette qui est coulissante par rapport à ce support amovible et qui coopère avec un moyen de butée solidaire du véhicule et limitant le mouvement de pivotement du pare-brise.

Selon une caractéristique de l'invention, l'actionneur comporte une vis rendue solidaire du moyen d'interfaçage par un premier pivot, la vis étant engagée dans un écrou rendu solidaire du premier montant par un second pivot.

Avantageusement, la vis est actionnée en rotation au moyen d'une manivelle.

Selon une autre caractéristique de l'invention, la biellette coulissante est articulée avec le second montant et comporte une lumière orientée dans le sens de la longueur de la biellette, lumière dans laquelle circule un pion de retenue qui est solidaire du support amovible.

Avantageusement, chaque montant comporte un raidisseur.

L'invention à aussi pour objet un Procédé permettant le pivotement d'un pare-brise lourd pour véhicule et dans lequel on met en oeuvre un outillage selon une des revendications précédentes, procédé caractérisé en ce qu'il comporte les étapes suivantes:
- on solidarise les montants de l'outillage avec les bords latéraux du pare-brise,
- on solidarise les platines, le moyen d'interfaçage et le support amovible avec le véhicule,
- on désolidarise le pare-brise du véhicule,
- on active l'actionneur pour provoquer le basculement du pare-brise.

L'invention sera mieux comprise à la lecture de la description des modes particuliers de réalisation du dispositif ainsi que des différentes étapes du procédé, description faite en référence aux dessins fournis en annexe et dans lesquels:
- la figure 1 représente un véhicule militaire blindé équipé de l'outillage,
- la figure 2 représente en vue latérale avant droite un véhicule équipé de l'outillage avec le pare-brise partiellement abaissé,
- la figure 3 représente en vue latérale avant gauche un véhicule équipé de l'outillage avec le pare-brise partiellement abaissé,
- la figure 4 représente une vue de l'avant d'un véhicule lors de la mise en place de l'outillage, et
- la figure 5 représente une vue du véhicule équipé de l'outillage avec le pare-brise en position déposée.

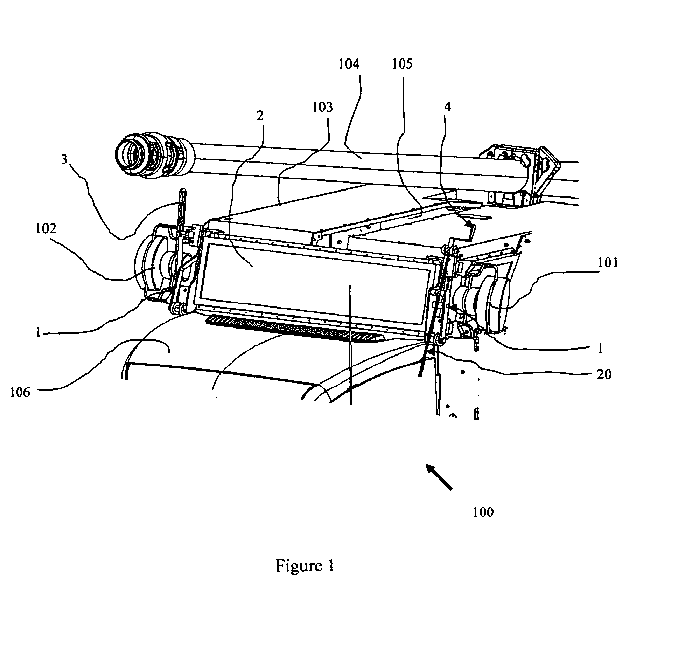

Selon la figure 1 et selon un mode de réalisation, un véhicule militaire 100 comportant une cabine blindée 103, dispose d'un pare-brise 2 blindé de forte épaisseur. Ce véhicule 100 transporte un canon 104 qui est susceptible de se positionner horizontalement lors d'opérations de transport aérien. Le tube du canon 104 doit alors traverser la cabine par un passage 105 et il est nécessaire pour permettre ce passage de faire basculer ou pivoter le pare-brise 2 vers le capot avant 106 de la cabine.

Sur ce véhicule 100 est monté à titre temporaire un outillage 1 solidarisé au véhicule 100 au niveau de l'armature de chacun des rétroviseurs 101 et 102. L'outillage 1 comporte une vis 20 solidaire d'une manivelle 4 et un moyen de butée 3 sécurisant le pivotement du pare-brise comme nous allons le voir dans la suite de la présente description.

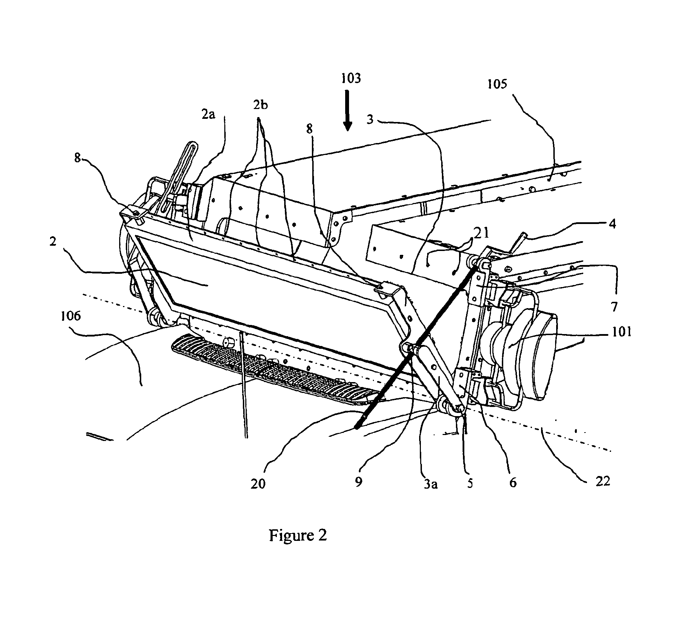

Selon la figure 2, le pare-brise 2 est partiellement abaissé vers le capot 106 du véhicule 100. On remarque que le pare-brise 2 comporte un cadre métallique rectangulaire 2a qui l'entoure complètement et qui assure le maintien des parties vitrées. Ce cadre 2a porte sur tout son pourtour des perçages 2b permettant la fixation par vissage du pare-brise 2 sur la cabine 103.

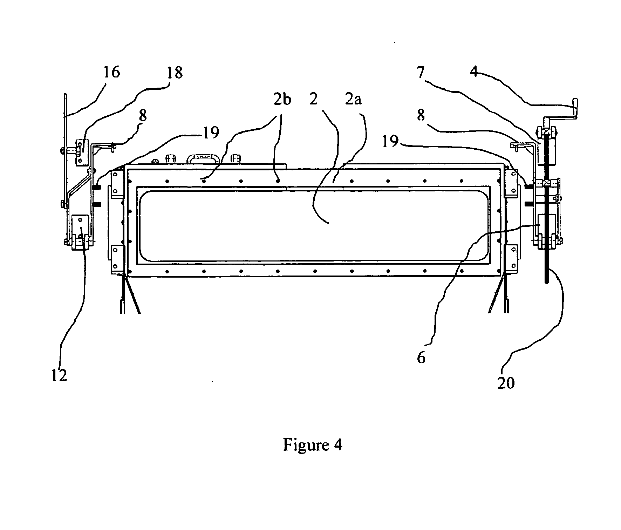

L'outillage 1 comporte un premier montant 3 comportant lui-même un raidisseur 3a. Le premier montant 1 est solidarisé rigidement avec un rebord supérieur du pare-brise (au niveau du cadre 2a) au moyen d'une vis 8 et il se positionne sur le rebord latéral du cadre 2a à l'aide d'ergots (non visibles sur la figure 2, repérés 19 sur la figure 4). Le premier montant 3 et le raidisseur 3a sont articulés dans leur partie basse par une liaison pivot 5 avec une platine amovible 6. Cette platine amovible 6 est solidarisée avec la partie basse de l'armature du rétroviseur 101.

L'outillage 1 comporte un moyen d'interface amovible 7 solidarisé avec la partie haute de l'armature du rétroviseur 101. Le moyen d'interface amovible 7 comporte une liaison pivot permettant de s'articuler avec la vis 20 au niveau de la tête de celle ci formée par une manivelle 4. La vis 20 est articulée par rapport au montant 3 et à son raidisseur grâce à une autre liaison pivot comportant un écrou 9.

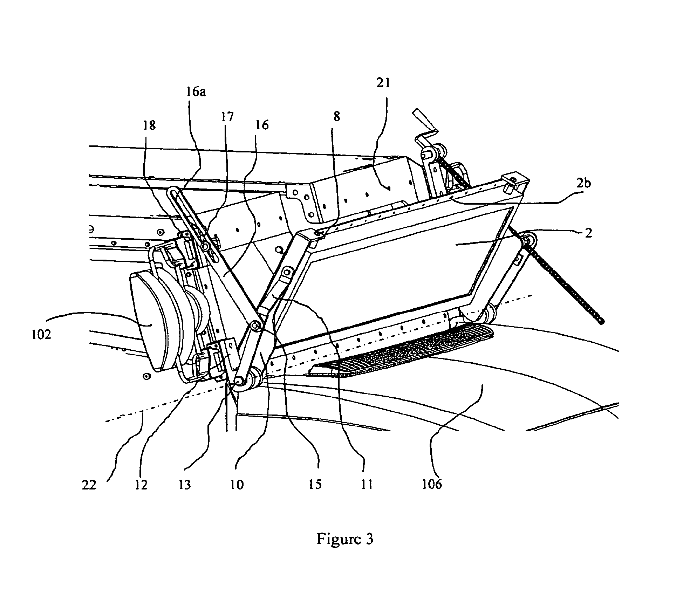

Selon la figure 3, l'autre extrémité du pare-brise 2 est rigidement solidarisée avec un second montant 10 par une vis 8 et des ergots (ergots non visibles sur la figure 4, et repérés 19 sur la figure 4). Ce second montant 10 comporte un second raidisseur 11. Le raidisseur 11 et le montant 10 sont articulés dans leur partie basse avec une seconde platine amovible 12 grâce à une liaison pivot 13.

Le second raidisseur 11 comporte une articulation par pivot 15 avec une biellette 16. Cette biellette 16 comporte une lumière 16a orientée dans le sens de la longueur de la biellette 16. Dans cette lumière 16a circule un pion de retenue 17 qui est solidaire d'un support amovible 18. La biellette 16 coulisse donc par rapport au support amovible 18 et le pion de retenue constitue une butée limitant le coulissement de la biellette 16 et par-là même la course du pare-brise. Le support amovible 18 est solidarisé avec la partie haute de l'armature du rétroviseur 102.

Les articulations des platines (liaison pivot 5 et 13) matérialisent un axe de pivotement 22 du pare-brise par rapport au véhicule. Cet axe 22 est positionné de manière à permettre une manoeuvre du pare-brise 2 sans interférence de celui ci avec le capot 106. Suivant la configuration du véhicule, l'homme du métier placera l'axe à l'endroit approprié comme par exemple pour le cas présent où l'axe 22 est placé horizontalement au voisinage du capot 106 et en avant du pare-brise 2.

Selon un autre mode de réalisation non représenté, la course du pare-brise peut être limitée en plaçant une butée formée par exemple par un écrou soudé au voisinage de l'extrémité de la vis 20 et qui viendra limiter la course de l'écrou 9.

La rotation de la manivelle 4 provoque la translation de l'écrou 9 le long de la vis 20. Le pas de la vis 2 est choisi suffisamment faible pour que le poids du pare-brise ne provoque pas la rotation de la vis 2 permettant ainsi de garder le pare-brise dans une position de pivotement intermédiaire permettant le passage du tube de l'arme 104.

Selon la figure 4 et selon le procédé associé à l'invention, la première partie de l'outillage 1 comportant la vis 20 est assemblée au moyen de la platine amovible 6 et du moyen d'interface amovible 7 sur les embases du rétroviseur 101 (rétroviseur non visible sur la figure). Les goujons 19 sont engagés dans des orifices (non visibles sur la figure) aménagés sur le cadre 2a du pare-brise. La vis 8 est solidarisée au pare-brise 2.

La seconde partie de l'outillage 1 comportant la biellette 16 est assemblée au moyen de la platine amovible 12 et du support amovible 18 sur les embases du rétroviseur 102 (rétroviseur non visible sur la figure). Les goujons 19 sont engagés dans des orifices (non visibles sur la figure) du cadre 2a du pare-brise 2. La vis 8 est solidarisée au pare-brise 2.

On procède alors au dévissage des vis 2b assurant la fixation du pare-brise sur la cabine. Une fois le pare-brise désolidarisé de la caisse du véhicule 100, il est possible de le basculer de l'angle souhaité par rapport au capot 106.

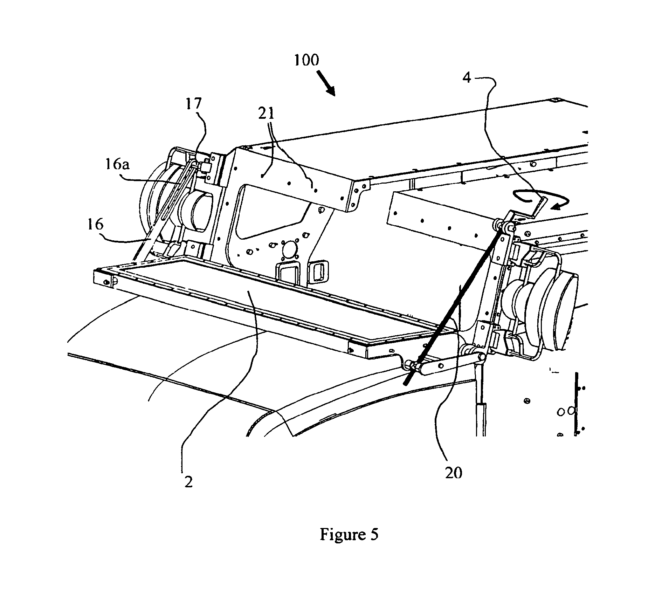

Selon la figure 5 et selon le procédé associé à l'invention, en tournant la manivelle 4 dans le sens d'un dévissage, l'outillage 1 va s'abaisser en entraînant le pare-brise 2 jusqu'à ce que le pion de retenue 17 arrive en butée à l'extrémité de la lumière 16a de la biellette 16.

Les longueurs de la vis 20 et de la biellette 16 sont choisies pour qu'il soit possible de faire pivoter le pare-brise 2 d'un angle suffisant pour permettre le passage du tube de l'arme 104 (visible sur la figure 1) en position sensiblement horizontale. Le pare-brise 2 est alors pratiquement en contact avec le capot 106.

Une fois le pare-brise 2 en appui sur le capot il sera par ailleurs possible de le démonter de l'outillage 1 pour un remplacement éventuel du pare-brise.

A l'inverse la rotation de la vis 20 dans le sens du vissage provoque une remontée du pare-brise 2 jusqu'à ce qu'il soit appliqué sur la cabine du véhicule 100. Il est alors possible de mettre en place les vis de fixation du pare-brise 2 sur la cabine (trous 2b sur le cadre 2a).

On notera qu'une action sur les vis 8 de l'outillage permet dans une certaine mesure un réglage de la position verticale du pare-brise 2. On facilite ainsi le positionnement des trous 2b en regard des taraudages 21 de la cabine (voir figures 2,3 et 5 par exemple). Ceci facilite la fixation du pare-brise 2 sur la cabine pour un opérateur seul.

Il est à noter que la lumière 16 doit avoir une longueur au moins égale à la longueur du filetage parcouru par le pivot écrou 9 sur la vis 20.

On notera également que la solidarisation du dispositif 1 sur le véhicule peut être réalisée au moyen d'aménagements permanent sur le véhicule par exemple au moyen de bossages taraudés pouvant accueillir les platines amovibles 6 et 12 ainsi que le support amovible 18 et le moyen d'interface amovible 7.

Une fois le pare-brise 2 totalement abaissé, on peut procéder au démontage de l'outillage 1 pour pouvoir retirer le pare-brise 2.

Le montage du pare-brise 2 implique bien entendu des opérations inverses à celles décrites précédemment.

Selon un autre mode de réalisation non représenté, l'actionneur pourra comporter un vérin double effet équipé de clapets antiretour pour assurer un maintien en position du pare-brise lors de l'arrêt de l'actionneur. La course du vérin devra être suffisante pour permettre au pare-brise d'occuper toutes les positions possibles, de la position en appui sur le capot 106 jusqu'à la mise en position sur la cabine 103.

## Revendications

1. Outillage (1) permettant un pivotement limité par rapport à un véhicule (100) d'un pare-brise (2) lourd par une seule personne, outillage (1) **caractérisé en ce qu'**il comporte deux montants (3 et 10) rigidement solidarisables avec les bords latéraux du pare-brise (2), chacun des montants (3 et 10) étant articulé par son extrémité basse avec une platine amovible (6, 12) qui est rendue solidaire du véhicule (100), les articulations (13, 5) des platines (6 et 12) matérialisant un axe de pivotement (22) du pare-brise (2) par rapport au véhicule (100), au moins un premier montant (3) étant relié par un actionneur (20) à un moyen d'interfaçage amovible (7) qui est fixé au véhicule (100) à proximité du rebord haut du pare-brise (2), l'actionneur (20) permettant de commander le pivotement du pare-brise (2) autour de l'axe de pivotement (22) et assurant le maintien du pare-brise (2) dans une position pivotée choisie.

2. Outillage (1) permettant le pivotement d'un pare-brise (2) selon la revendication 1 **caractérisé en ce qu'**un second montant (10) est relié à un support amovible (18) solidaire du véhicule (100) à proximité du rebord haut du pare-brise (2) par une biellette (16) qui est coulissante par rapport à ce support amovible (18) et qui coopère avec un moyen de butée (17) solidaire du véhicule (100) et limitant le mouvement de pivotement du pare-brise (2).

3. Outillage (1) permettant le pivotement d'un pare-brise (2) selon une des revendications 1 ou 2, **caractérisé en ce que** l'actionneur (20) comporte une vis rendue solidaire du moyen d'interfaçage (7) par un premier pivot, la vis étant engagée dans un écrou (9) rendu solidaire du premier montant (3) par un second pivot.

4. Outillage (1) permettant le pivotement d'un pare-brise (2) selon la revendication 3 **caractérisé en ce que** la vis (20) est actionnée en rotation au moyen d'une manivelle (4).

5. Outillage (1) permettant le pivotement d'un pare-brise (2) selon la revendication 2 **caractérisé en ce que** la biellette (16) coulissante est articulée avec le second montant (10) et comporte une lumière (16a) orientée dans le sens de la longueur de la biellette (16), lumière (16a) dans laquelle circule un pion de retenue (17) qui est solidaire du support amovible (10).

6. Outillage (1) permettant le pivotement d'un pare-brise (2) selon une des revendications 1 à 5, caractérisé en ce chaque montant (3 et 10)comporte un raidisseur (11, 3a).

7. Procédé permettant le pivotement d'un pare-brise (2)lourd pour véhicule (100) et dans lequel on met en oeuvre un outillage (1) selon une des revendications précédentes, **caractérisé en ce qu'**il comporte les étapes suivantes:
- on solidarise les montants (3, 10) de l'outillage (1) avec les bords latéraux du pare-brise (2),
- on solidarise les platines (6, 12), le moyen d'interfaçage (7) et le support amovible (18) avec le véhicule (100),
- on désolidarise le pare-brise (2) du véhicule (100),
- on active l'actionneur (20) pour provoquer le basculement du pare-brise (2).

## Claims

1. Tooling (1) to enable a limited pivoting with respect to a vehicle (100) of a heavy windshield (2) by one person, tooling (100) **characterized in that** it incorporates two uprights (3 and 10) able to be rigidly joined to the lateral edges of the windshield (2), each of the uprights (3 and 10) being hinged by its lower extremity to a moveable plate (6, 12) made integral with the vehicle (100), the hinges (13, 5) of the plates (6 and 12) forming a pivotal axis (22) for the windshield (2) with respect to the vehicle (110), at least a first upright (3) being linked by an actuator (20) to removable interfacing means (7) fixed to the vehicle (100) close to the upper edge of the windshield (2), the actuator (20) enabling the pivoting of the windshield (2) around the pivotal axis (22) to be activated and ensuring that the windshield (2) is held in a chosen pivoted position.

2. Tooling (1) enabling the pivoting of a windshield (2) according to Claim 1, **characterized in that** a second upright (10) is linked to a removable support (18) integral with the vehicle (100) close to the upper edge of the windshield (100) by means of a connecting rod (16) able to slide with respect to this removable support (18) and cooperating with stop means (17) integral with the vehicle (100) and limiting the pivotal movement of the windshield (2).

3. Tooling (1) enabling the pivoting of a windshield (2) according to one of Claims 1 or 2, **characterized in that** the actuator (20) incorporates a screw made integral with the interfacing means (7) by a first pivot, the screw being engaged in a nut (9) made integral with the first upright (3) by a second pivot.

4. Tooling (1) enabling the pivoting of a windshield (2) according to Claim 3, **characterized in that** the screw (20) is activated in rotation by means of a crank (4).

5. Tooling (1) enabling the pivoting of a windshield (2) according to Claim 2, **characterized in that** the sliding connecting rod (16) is hinged to a second upright (10) and incorporates a slot (16a) oriented lengthwise with respect to the connecting rod (16), slot (16a) wherein slides a retaining pin (17) integral with the removable support (10).

6. Tooling (1) enabling the pivoting of a windshield (2) according to one of Claims 1 to 5, **characterized in that** each upright (3 and 10) is fitted with a stiffener (11, 3a).

7. Process enabling the pivoting of a heavy windshield (2) for a vehicle (100) and in which tooling (1) according to one of the above Claims is implemented, **characterized in that** it incorporates the following steps:
- the uprights (3, 10) of the tooling (1) are made integral with the lateral edges of the windshield (2),
- the plates (6, 12), the interfacing means (7) and the removable support (18) are made integral with the vehicle (100),
- the windshield (2) is loosed from the vehicle (100),
- the actuator (20) is activated so as to make the windshield (2) tilt.

## Patentansprüche

1. Arbeitsgerät (1), welches eine begrenzte Drehung einer schweren Windschutzscheibe (2) durch eine einzelne Person in Bezug auf ein Fahrzeug (100) ermöglicht, wobei das Arbeitsgerät (1) **dadurch gekennzeichnet ist, dass** es zwei Stützen (3 und 10) umfasst, welche mit den seitlichen Kanten der Windschutzscheibe (2) starr verbindbar sind, wobei jede Stütze (3 und 10) an ihrem unteren Ende an eine abnehmbare Platte (6, 12), die fest mit dem Fahrzeug (100) verbunden ist, angelenkt ist, wobei die Gelenke (13, 5) der Platten (6 und 12) eine Achse (22) zur Drehung der Windschutzscheibe (2) in Bezug auf das Fahrzeug (100) bilden, wobei wenigstens eine erste Stütze (3) über ein Stellglied (20) mit einem abnehmbaren Kopplungsmittel (7) verbunden, welches an dem Fahrzeug (100) in der Nähe des oberen Randes der Windschutzscheibe (2) befestigt ist, wobei es das Stellglied (20) ermöglicht, die Drehung der Windschutzscheibe (2) um die Drehachse (22) zu ermöglichen und das Festhalten der Windschutzscheibe (2) in einer gewünschten, gedrehten Position zu gewährleisten.

2. Arbeitsgerät (1), welches eine Drehung einer Windschutzscheibe (2) nach Anspruch 1 ermöglicht, **dadurch gekennzeichnet, dass** eine zweite Stütze (10) mit einem abnehmbaren Träger (18), der in der Nähe des oberen Randes der Windschutzscheibe (2) fest mit dem Fahrzeug (100) verbunden ist, durch eine Stange (16) verbunden ist, welche in Bezug auf diesen abnehmbaren Träger (18) verschiebbar ist und die mit einem Anschlagmittel (17), das fest mit dem Fahrzeug (100) verbunden ist und die Drehbewegung der Windschutzscheibe (2) begrenzt, zusammenwirkt.

3. Arbeitsgerät (1), welches eine Drehung einer Windschutzscheibe (2) nach einem der Ansprüche 1 oder 2 ermöglicht, **dadurch gekennzeichnet, dass** das Stellglied (20) eine durch ein erstes Drehgelenk fest mit dem Kopplungsmittel (7) verbundene Schraube umfasst, wobei die Schraube in eine Mutter (9) eingreift, welche mit der ersten Stütze (3) durch ein zweites Drehgelenk fest verbunden ist.

4. Arbeitsgerät (1), welches eine Drehung einer Windschutzscheibe (2) nach Anspruch 3 ermöglicht, **dadurch gekennzeichnet, dass** die Schraube (20) mittels einer Kurbel (4) in Drehung versetzt wird.

5. Arbeitsgerät (1), welches eine Drehung einer Windschutzscheibe (2) nach Anspruch 2 ermöglicht, **dadurch gekennzeichnet, dass** die verschiebbare Stange (16) an die zweite Stütze (10) angelenkt ist und ein Langloch (16a) umfasst, welches in Längsrichtung der Stange (16) ausgerichtet ist, wobei sich in dem Langloch (16a) ein Rückhaltezapfen (17) bewegt, welcher fest mit dem abnehmbaren Träger (10) verbunden ist.

6. Arbeitsgerät (1), welches eine Drehung einer Windschutzscheibe (2) nach einem der Ansprüche 1 bis 5 ermöglicht, **dadurch gekennzeichnet, dass** jede Stütze (3 und 10) eine Versteifung (11, 3a) aufweist.

7. Verfahren, welches eine Drehung einer schweren Windschutzscheibe (2) für ein Fahrzeug (100) ermöglicht, und bei welchem ein Arbeitsgerät (1) nach einem der vorhergehenden Ansprüche eingesetzt wird, **dadurch gekennzeichnet, dass** es die folgenden Schritte umfasst:
- die Stützen (3, 10) des Arbeitsgerätes (1) werden mit den seitlichen Kanten der Windschutzscheibe (2) verbunden,
- die Platten (6, 12), das Kopplungsmittel (7) und der abnehmbare Träger (18) werden mit dem Fahrzeug (100) fest verbunden,
- die Windschutzscheibe (2) wird vom Fahrzeug (100) getrennt,
- das Stellglied (20) wird aktiviert, um das Schwenken der Windschutzscheibe (2) zu bewirken.
